# EUROPEAN PATENT SPECIFICATION

(11) **EP 3 238 467 B1**
(45) Date of publication and mention of the grant of the patent: **19.12.2018**
(21) Application number: 15801537.0
(22) Date of filing: 04.11.2015
(51) Int. Cl.: H04W 4/00, H04W 84/12

(54) **CONTROLLING A MODALITY OF A DOCKEE IN A WIRELESS DOCKING SYSTEM**
STEUERUNG EINER MODALITÄT EINES DOCKEES IN EINEM DRAHTLOSEN ANDOCKSYSTEM
COMMANDE D'UNE MODALITÉ DE DISPOSITIF ACCUEILLI DANS UN SYSTÈME D'ACCUEIL SANS FIL

(30) Priority: 23.12.2014 US 201414581988
(43) Date of publication of application: 01.11.2017
(73) Proprietor: Qualcomm Incorporated, San Diego, CA 92121-1714 (US)
(72) Inventor: VERMA, Lochan, San Diego, California 92121-1714 (US); MAKAR, Mina Ayman Saleh Yanni, San Diego, California 92121-1714 (US); RAVEENDRAN, Vijayalakshmi Rajasundaram, San Diego, California 92121-1714 (US)
(74) Representative: Emde, Eric
(86) International application number: PCT/US2015/059040
(87) International publication number: WO 2016/105669

(56) References cited:
- WO-A1-2014/057465
- WO-A1-2014/139868
- US-A1- 2012 265 913

## Description

### CROSS-REFERENCE TO RELATED APPLICATION

This application claims priority to and the benefit of Non-Provisional Application No. 14/581,988 filed in the U.S. Patent and Trademark Office on December 23, 2014, the entire content of which is incorporated herein by reference.

### TECHNICAL FIELD

Aspects of the present disclosure relate, generally, to a wireless docking system and, more particularly, to controlling a modality of a dockee in a wireless docking system.

### BACKGROUND

Wireless communication networks are widely deployed to provide various communication services such as telephony, video, data, messaging, broadcasts, and so on. Recent interest has been directed toward wireless local area network (WLAN) connectivity, where a dockee, e.g., a mobile device, such as a cellular telephone, can utilize a WLAN interface to establish wireless communication links with one or more peripheral devices. A peripheral device can include various types of devices, such as a mouse, a keyboard, a display, a printer, a camera, speakers, mass storage devices, media servers, sensors, and various other devices.

A device that is capable of docking to another device may be referred to as a dockee. The device to which the dockee docks may be referred to as a docking station. In existing systems, the dockee may detect that it has docked to the docking station. The dockee may perform an operation in response to detecting that it has docked to the docking station. For example, the dockee may turn off its display in response to detecting that it has docked to the docking station. However, in existing systems, the docking station does not control the behavior of the dockee during the docking session. Instead, the dockee detects that it is docked to a docking station and, in response, changes its own behavior.

However, such a configuration may have various limitations. For example, a company may have a privacy policy that requires cameras of dockees located within company premises to be turned off. To implement such a privacy policy, the docking station may need to control the behavior of dockees docked to the company's docking stations. However, in existing systems, the docking station does not control the behavior of the dockee during the docking session. Accordingly, enhancements that overcome such limitations may provide various improvements to a wireless docking system.

Document WO2014/139868 describes a docking station in which the functionality of the dockees can be controlled by settings in the docking station and by a primary dockee device.

### SUMMARY

The following presents a simplified summary of one or more aspects of the present disclosure, in order to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in a simplified form as a prelude to the more detailed description that is presented later.

Various aspects of the present disclosure provide for determining whether a condition is satisfied during a docking session with a dockee and transmitting data to the dockee when the condition is satisfied. The transmitted data may control a modality of the dockee. The modality of the dockee may include a behavior of one or more components of the dockee. In some configurations, the condition includes a predetermined user input to a peripheral device communicating with the docking station during the docking session. In some configurations, the condition includes a number of dockees docked to the docking station being equal to or greater than a threshold number of dockees. In some configurations, the condition includes another dockee being docked to the docking station, and the transmitted data controls the modality of the dockee such that the dockee communicates with the another dockee exclusively via the docking station. In some configurations, the condition includes a unique identifier of the dockee being associated with a modality profile accessible to the docking station, and the transmitted data controls the modality of the dockee according to the modality profile. In some configurations, the docking station is associated with an environment, and the transmitted data controls the modality of the dockee according to settings corresponding to the environment. In some configurations, the present disclosure provides for routing data from the dockee to a peripheral device based on settings associated with a location of the docking station. In some configurations, the transmitted data controls the modality of the dockee such that the one or more components of the dockee conserve power consumption. Additional aspects, embodiments, and features are also provided herein.

In an aspect, the present disclosure provides a method that includes determining whether a condition is satisfied during a docking session with a dockee and transmitting data to the dockee when the condition is satisfied. The transmitted data may control a modality of the dockee. The modality of the dockee may include a behavior of one or more components of the dockee.

In another aspect, the present disclosure provides an apparatus for wireless communication. The apparatus includes a transceiver, a memory, and at least one processor communicatively coupled to the transceiver and the memory. The at least one processor may be configured to determine whether a condition is satisfied during a docking session with a dockee and transmit data to the dockee when the condition is satisfied. The transmitted data may control a modality of the dockee. The modality of the dockee may include a behavior of one or more components of the dockee.

In another aspect, the present disclosure provides another apparatus for wireless communication. The apparatus includes means for determining whether a condition is satisfied during a docking session with a dockee and means for transmitting data to the dockee when the condition is satisfied. The transmitted data may control a modality of the dockee. The modality of the dockee may include a behavior of one or more components of the dockee.

In another aspect, the present disclosure provides a computer-readable medium of an apparatus. The computer-readable medium includes computer-executable code configured for determining whether a condition is satisfied during a docking session with a dockee and transmitting data to the dockee when the condition is satisfied. The transmitted data may control a modality of the dockee. The modality of the dockee may include a behavior of one or more components of the dockee.

These and other aspects of the present disclosure will become more fully understood upon a review of the detailed description, which follows. Other aspects, features, and embodiments of the present disclosure will become apparent to those of ordinary skill in the art, upon reviewing the following description of specific, exemplary embodiments of the present disclosure in conjunction with the accompanying figures. While features of the present disclosure may be discussed relative to certain embodiments and figures below, all embodiments of the present disclosure can include one or more of the advantageous features discussed herein. In other words, while one or more embodiments may be discussed as having certain advantageous features, one or more of such features may also be used in accordance with the various embodiments of the disclosure discussed herein. In similar fashion, while exemplary embodiments may be discussed below as device, system, or method embodiments it should be understood that such exemplary embodiments can be implemented in various devices, systems, and methods.

### BRIEF DESCRIPTION OF THE DRAWINGS

FIG. 1 is a diagram illustrating an example of a hardware implementation of a docking station.
FIG. 2 is a diagram illustrating examples of various modalities of a dockee.
FIG. 3 is a diagram illustrating an example of a dockee docking to a docking station.
FIG. 4 is a diagram illustrating an example of a dockee docking to a docking station in a meeting room.
FIG. 5 is a diagram illustrating an example of a dockee in communication with various docking stations.
FIG. 6 is a diagram illustrating an example of a dockee in communication with various docking stations in an enterprise environment.
FIG. 7 is a diagram illustrating an example of a dockee docking to docking stations associated with various environments.
FIG. 8 is a diagram illustrating an example of a dockee docking to a docking station associated with a home environment.
FIG. 9 is a diagram illustrating an example of various dockees docking to a docking station.
FIG. 10 is a diagram illustrating examples of various methods and/or processes of the docking station.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

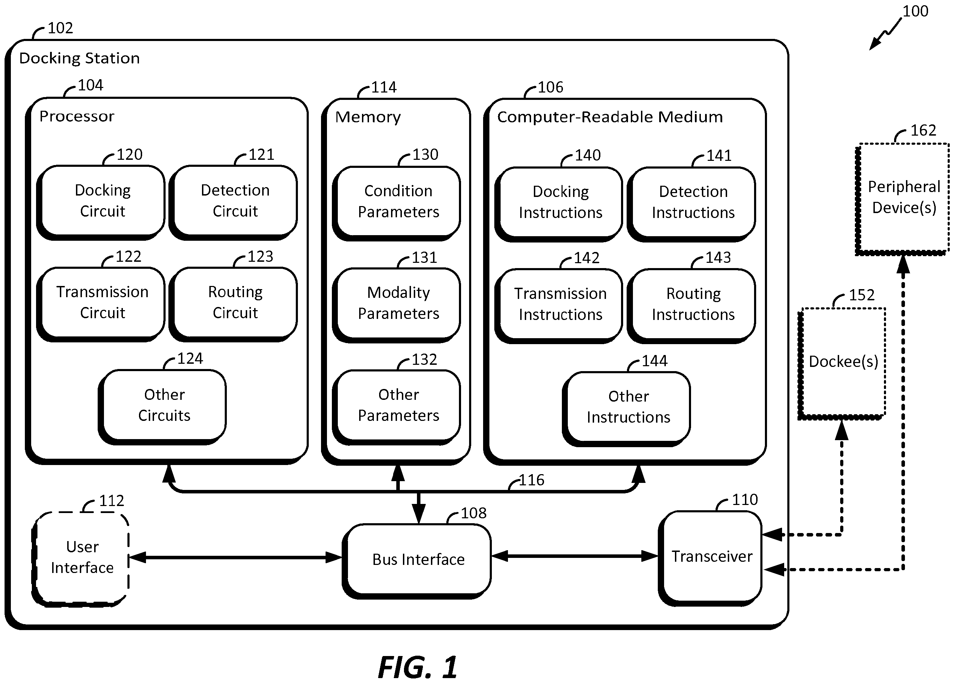

FIG. 1 is a diagram 100 illustrating an example of a hardware implementation of a docking station 102 in accordance with various aspects of the present disclosure. The diagram 100 illustrates a docking station 102, a dockee 152, and a peripheral device 162. Although various portions of the description provided herein may refer to a "docking station," one of ordinary skill in the art will understand that the "docking station" may be any apparatus configured to communicate with another apparatus, such as the dockee 152. Although various portions of the description provided herein may refer to a "dockee," one of ordinary skill in the art will understand that the "dockee" may be any apparatus configured to communicate with another apparatus, such as the docking station 102. By way of example and not limitation, the dockee 152 may be a cellular telephone, a smartphone, user equipment, a tablet computer, a laptop computer, a personal digital assistant (PDA), a gaming device, an e-reader, and/or any other apparatus configured to communicate with another apparatus, such as the docking station 102. Although various portions of the description provided herein may refer to a "peripheral device," one of ordinary skill in the art will understand that the "peripheral device" may be any apparatus configured to communicate with another apparatus, such as the docking station 102. By way of example and not limitation, the peripheral device 162 may be a keyboard, a mouse, a display, a projector, a camera, a sensor, a headset, headphones, or even another dockee.

The docking station 102 may include a user interface 112. The user interface 112 may be configured to receive one or more inputs from a user of the docking station 102. The user interface 112 may also be configured to display information (e.g., text and/or images) to the user of the docking station 102. The user interface 112 may exchange data via the bus interface 108.

The docking station 102 may also include a transceiver 110. The transceiver 110 may be configured to receive data and/or transmit data in communication with another apparatus. The transceiver 110 provides a means for communicating with another apparatus via a wired or wireless transmission medium. For example, the transceiver 110 may provide the means for establishing a wireless docking session with another apparatus and/or device, such as the dockee 152 and/or the peripheral device 162. The transceiver 110 may be configured to perform such communications using various types of technologies. One of ordinary skill in the art will understand that many types of technologies may perform such communication without deviating from the scope of the present disclosure.

The docking station 102 may also include a memory 114, one or more processors 104, a computer-readable medium 106, and a bus interface 108. The bus interface 108 may provide an interface between a bus 116 and the transceiver 110. The memory 114, the one or more processors 104, the computer-readable medium 106, and the bus interface 108 may be connected together via the bus 116.

The processor 104 may be communicatively coupled to the transceiver 110 and/or the memory 114. The processor 104 may include a docking circuit 120. The docking circuit 120 may include various hardware components and/or software modules that can perform various functions and/or enable various aspects associated with docking of the dockee 152 to the docking station 102. To establish a docking session, the docking station 102 and the dockee 152 may each receive and/or transmit various types of information. For example, the dockee 152 may transmit a probe request to the docking station 102. In response to the probe request, the docking station 102 may transmit a response message. Such exchanges of information may allow the dockee 152 to discover the docking station 102. The dockee 152 and the docking station 102 may also engage in various authentication/association exchanges. The dockee 152 and the docking station 102 may also engage in a handshake procedure as well as a channel establishment process. However, one of ordinary skill in the art will understand that every feature described in the above non-limiting example is not necessarily required and that alternative and/or additional features may be implemented without deviating from the scope of the present disclosure.

The processor 104 may also include a detection circuit 121. The detection circuit 121 may include various hardware components and/or software modules that can perform various functions and/or enable various aspects associated with determining whether a condition is satisfied during a docking session with the dockee 152. The detection circuit 121 provides the means for determining whether a condition is satisfied during a docking session with the dockee 152. Various non-limiting examples of such a condition are provided in greater detail throughout the present disclosure. In some configurations, the condition includes a predetermined user input to a peripheral device communicating with the docking station during the docking session. In some configurations, the condition includes a number of dockees docked to the docking station being equal to or greater than a threshold number of dockees. In some configurations, the condition includes another dockee being docked to the docking station. In some configurations, the condition includes a unique identifier of the dockee being associated with a modality profile accessible to the docking station.

The processor 104 may also include a transmission circuit 122. The transmission circuit 122 may include various hardware components and/or software modules that can perform various functions and/or enable various aspects associated with transmitting various data to the dockee 152 and/or the peripheral device 162. The transmission circuit 122 provides the means for transmitting data to the dockee when the condition is satisfied. The transmitted data may control a modality of the dockee, and the modality of the dockee may include a behavior of one or more components of the dockee. In some configurations, the transmitted data controls the modality of the dockee such that the dockee communicates with another dockee exclusively via the docking station. In some configurations, the transmitted data controls the modality of the dockee according to a modality profile. In some configurations, the transmitted data controls the modality of the dockee such that one or more components of the dockee conserve power consumption.

The processor 104 may also include a routing circuit 123. The routing circuit 123 may include various hardware components and/or software modules that can perform various functions and/or enable various aspects associated with routing data to and/or from the dockee 152 and/or the peripheral device 162. In some configurations, the routing circuit 123 provides the means for routing data from the dockee 152 to the peripheral device 162 based on settings associated with a location of the docking station 102.

The foregoing description provides a non-limiting example of the processor 104 of the docking station 102. Although various circuits have been described above, one of ordinary skill in the art will understand that the processor 104 may also include various other circuits 124 that are in addition and/or alternative(s) to circuits 120, 121, 122, 123. Such other circuits 124 may provide the means for performing any one or more of the functions, methods, processes, features and/or aspects described herein.

The computer-readable medium 106 may include various instructions. The instructions may include computer-executable code configured to perform various functions and/or enable various aspects described herein. The computer-executable code may be executed by various hardware components (e.g., the processor 104) of the docking station 102. The instructions may be a part of various software programs and/or software modules.

The computer-readable medium 106 may include docking instructions 140. The docking instructions 140 may include computer-executable code configured for performing various functions and/or enable various aspects associated with docking of the dockee 152 to the docking station 102. To establish a docking session, the docking station 102 and the dockee 152 may each receive and/or transmit various types of information. For example, the dockee 152 may transmit a probe request to the docking station 102. In response to the probe request, the docking station 102 may transmit a response message. Such exchanges of information may allow the dockee 152 to discover the docking station 102. The dockee 152 and the docking station 102 may also engage in various authentication/association exchanges. The dockee 152 and the docking station 102 may also engage in a handshake procedure as well as a channel establishment process. However, one of ordinary skill in the art will understand that every feature described in the above non-limiting example is not necessarily required and that alternative and/or additional steps may be implemented without deviating from the scope of the present disclosure.

The computer-readable medium 106 may also include detection instructions 141. The detection instructions 141 may include computer-executable code configured for performing various functions and/or enable various aspects associated with determining whether a condition is satisfied during a docking session with the dockee 152. Various non-limiting examples of such a condition are provided in greater throughout the present disclosure. In some configurations, the condition includes a predetermined user input to a peripheral device communicating with the docking station during the docking session. In some configurations, the condition includes a number of dockees docked to the docking station being equal to or greater than a threshold number of dockees. In some configurations, the condition includes another dockee being docked to the docking station. In some configurations, the condition includes a unique identifier of the dockee being associated with a modality profile accessible to the docking station.

The computer-readable medium 106 may also include transmission instructions 142. The transmission instructions 142 may include computer-executable code configured for performing various functions and/or enable various aspects associated with transmitting various data to the dockee 152 and/or the peripheral device 162. The transmitted data may control a modality of the dockee, and the modality of the dockee may include a behavior of one or more components of the dockee. In some configurations, the transmitted data controls the modality of the dockee such that the dockee communicates with another dockee exclusively via the docking station. In some configurations, the transmitted data controls the modality of the dockee according to a modality profile. In some configurations, the transmitted data controls the modality of the dockee such that one or more components of the dockee conserve power consumption.

The computer-readable medium 106 may also include routing instructions 143. The routing instructions 143 may include computer-executable code configured for performing various functions and/or enable various aspects associated with routing data to and/or from the dockee 152 and/or the peripheral device 162. For example, in some configurations, the computer-executable code may be further configured for routing data from the dockee 152 to the peripheral device 162 based on settings associated with a location of the docking station 102.

The foregoing description provides a non-limiting example of the computer-readable medium 106 of the docking station 102. Although various instructions (e.g., computer-executable code) have been described above, one of ordinary skill in the art will understand that the computer-readable medium 106 may also include various other instructions 144 that are in addition and/or alternative(s) to instructions 140, 141, 142, 143. Such other instructions 144 may include computer-executable code configured for performing any one or more of the functions, methods, processes, features and/or aspects described herein.

The memory 114 may include various memory modules. The memory modules may be configured to store, and have read therefrom, various values and/or information by the processor 104, or any of its circuits 120, 121, 122, 123, 124. The memory modules may also be configured to store, and have read therefrom, various values and/or information upon execution of the computer-executable code included in the computer-readable medium 106, or any of its instructions 140, 141, 142, 143, 144.

The memory 114 may include condition parameters 130. The condition parameters 130 may include data pertaining to the set of parameters and/or functions that characterize the conditions described in greater detail herein. For example, the condition parameters 130 may indicate the parameters that must be met before the docking station 102 may determine that the aforementioned condition has been met. Additional description pertaining to various conditions is provided throughout the present disclosure.

The memory 114 may also include modality parameters 131. The modality parameters 131 may include data pertaining to the set of parameters and/or functions that characterize the modalities of the dockee 152, as described in greater detail herein. For example, the modality parameters 131 may indicate the parameters that define each modality of the dockee 152. More specifically, the modality parameters 131 may indicate the parameters that define the specific behaviors of one or more components of the dockee 152. Additional description pertaining to the modality and behavior of the dockee 152 is provided throughout the present disclosure.

One of ordinary skill in the art will also understand that the docking station 102 may include alternative and/or additional features without deviating from the scope of the present disclosure. In accordance with various aspects of the present disclosure, an element, or any portion of an element, or any combination of elements may be implemented with a processing system that includes one or more processors 104. Examples of the one or more processors 104 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. The processing system may be implemented with a bus architecture, represented generally by the bus 116 and bus interface 108. The bus 116 may include any number of interconnecting buses and bridges depending on the specific application of the processing system and the overall design constraints. The bus 116 may link together various circuits including the one or more processors 104, the memory 114, and the computer-readable media 106. The bus 116 may also link various other circuits such as timing sources, peripherals, voltage regulators, and power management circuits, which are well known in the art.

The one or more processors 104 may be responsible for managing the bus 116 and general processing, including the execution of software stored on the computer-readable medium 106. The software, when executed by the one or more processors 104, causes the processing system to perform the various functions described below for any one or more apparatuses. The computer-readable medium 106 may also be used for storing data that is manipulated by the one or more processors 104 when executing software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on the computer-readable medium 106. The computer-readable medium 106 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium 106 may also include, by way of example, a carrier wave, a transmission line, and any other suitable medium for transmitting software and/or instructions that may be accessed and read by a computer. The computer-readable medium 106 may reside in the processing system, external to the processing system, or distributed across multiple entities including the processing system. The computer-readable medium 106 may be embodied in a computer program product. By way of example and not limitation, a computer program product may include a computer-readable medium in packaging materials. Those skilled in the art will recognize how best to implement the described functionality presented throughout this disclosure depending on the particular application and the overall design constraints imposed on the overall system.

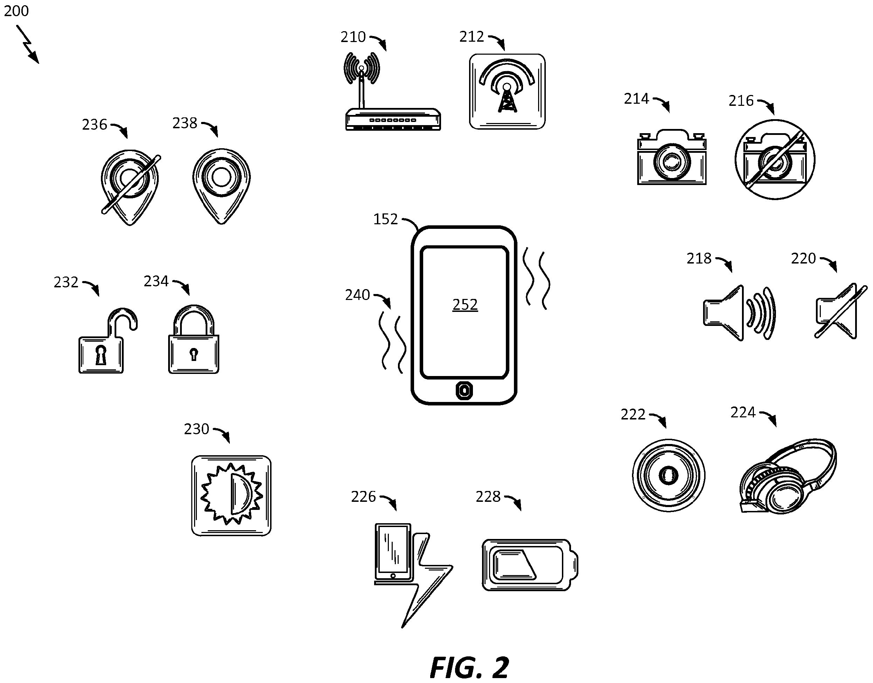

FIG. 2 is a diagram 200 illustrating examples of various modalities of a dockee 152. In the example illustrated in FIG. 2, the dockee 152 is a mobile device (e.g., a smartphone). The modality may refer to a general state, attribute, feature, and/or configuration of the dockee 152. The modality may include a behavior of one or more components of the dockee 152. The behavior may refer to specific operational characteristics, algorithms, values, and/or settings of such components. Such components may include visual, auditory, and/or haptic components of the dockee 152. As illustrated in FIG. 2, the dockee 152 may include a display 252. Based on the modality of the dockee 152, the dockee 152 may display (or refrain from displaying) various messages, graphics, text, and/or other information on the display 252.

In some configurations, the modality may affect the behavior of a component of the dockee 152 that facilitates connectivity to the Internet. For example, the dockee 152 may enable and/or disable an antenna for Internet connectivity via an access point 210. The access point 210 may facilitate a wireless local area network (WLAN) in accordance with various communication protocols, such as the communication protocols of Institute of Electrical and Electronic Engineers (IEEE) 802.11. As such, the dockee 152 may access the Internet via the access point 210. As another example, the dockee 152 may enable and/or disable an antenna for Internet connectivity via a base station 212. The base station 212 may provide high-speed data for mobile phones and data terminals. For instance, the base station 212 may be an Evolved Node B (eNB) of an Evolved Universal Terrestrial Radio Access (E-UTRA) of a Long Term Evolution (LTE) communication system. As such, the dockee 152 may access the Internet via the base station 212. In some circumstances, the dockee 152 may be able to connect to the Internet via both the access point 210 as well as the base station 212. When docked to the docking station 102, the dockee 152 may utilize a modality that disables Internet connectivity via the base station 212 and enables Internet connectivity via the access point 210. Such a modality may allow the dockee 152 to conserve use of a mobile data plan, conserve power consumption, and/or provide enhanced data upload/download speeds.

In some configurations, the modality may affect the behavior of a component of the dockee 152 that pertains to capturing an image and/or a video. For example, the dockee 152 may enable a camera 214 and/or disable a camera 216. The camera may be coupled to (e.g., "built-in to") the dockee 152. The camera may be configured to capture images and/or videos. The images and/or videos may be stored in a memory module of the dockee 152 and/or shown on the display 252 of the dockee 152. In some circumstances, the dockee 152 may enter an area containing secret, classified, and/or confidential information. Upon entering such an area, the dockee 152 may dock to the docking station 102. When docked to the docking station 102, the dockee 152 may utilize a modality that disables the camera 216. Such a modality may prevent the dockee 152 from capturing images and/or video of such secret, classified, and/or confidential information. After the dockee 152 leaves such an area, the dockee 152 may no longer be docked to the docking station 102. When no longer docked to the docking station 102, the dockee 152 may utilize an alternative modality that enables the camera 214.

In some configurations, the modality may affect the behavior of a component of the dockee 152 that pertains to a speakerphone. For example, the dockee 152 may enable a speakerphone 218 and/or disable a speakerphone 220. The speakerphone may receive auditory input from a user and/or provide an auditory output to the user. Such an auditory output may be relatively loud. In some circumstances, the dockee 152 may enter a quiet area, such as a library. Upon entering such an area, the dockee 152 may dock to the docking station 102. When docked to the docking station 102, the dockee 152 may utilize a modality that disables the speakerphone 220. Such a modality may prevent the dockee 152 from projecting the relatively loud auditory output of the speakerphone into the quiet area (e.g., the library). After the dockee 152 leaves such an area, the dockee 152 may no longer be docked to the docking station 102. When no longer docked to the docking station 102, the dockee 152 may utilize an alternative modality that enables the speakerphone 218.

In some configurations, the modality may affect the behavior of a component of the dockee 152 that transmits a signal for an external speaker. Such an external speaker may be a wall-mounted speaker 222, headphone speakers 224, and/or any other suitable type of speaker located external (e.g., not "built-in") to the dockee 152. The dockee 152 may communicate with a transceiver associated with the external speakers (e.g., wall-mounted speaker 222, headphone speakers 224, etc.). Such communication may use various communication technologies (e.g., Bluetooth™). The dockee 152 may enable and/or disable the transmission of the signal for the external speakers. In some circumstances, the dockee 152 may enter a conference room, where a meeting may be conducted. Upon entering such an area, the dockee 152 may dock to the docking station 102. When docked to the docking station 102, the dockee 152 may utilize a modality that enables transmission of a signal for the wall-mounted speakers 222. Such a modality may allow the dockee 152 to utilize the wall-mounted speakers 222 to play audio content during the meeting in the conference room. After the dockee 152 leaves such an area, the dockee 152 may no longer be docked to the docking station 102. When no longer docked to the docking station 102, the dockee 152 may utilize an alternative modality that enables the transmission of a signal for headphone speakers 224. Such a modality may allow the dockee 152 to utilize the headphone speakers 224 to listen to audio content that is not intended to be played during the meeting in the conference room.

In some configurations, the modality may affect the behavior of a component of the dockee 152 that pertains to battery charging and/or power consumption. The dockee 152 may include a battery. At various times, the battery may be charging 226. At various other times, the battery may be discharging 228. The battery may be charged using various techniques, such as wireless charging. Various techniques may allow for wireless charging. In some circumstances, the dockee 152 may be moved to an area (e.g., an office workspace) that provides a wireless charging station. Upon entering such an area, the dockee 152 may dock to the docking station 102. When docked to the docking station 102, the dockee 152 may utilize a modality that enables battery charging 226 using wireless charging. Such a modality may allow the dockee 152 to utilize the wireless charging station for power instead of using the power stored in the battery. After the dockee 152 leaves such an area, the dockee 152 may no longer be docked to the docking station 102. When no longer docked to the docking station 102, the dockee 152 may utilize an alternative modality that enables the discharging 228 of the battery.

In some configurations, the modality may affect the behavior of a component of the dockee 152 that pertains to brightness adjustment 230 of the display 252. The brightness of the display may be adjusted automatically by the dockee 152. Such brightness adjustment 230 may be performed based on various factors. In some circumstances, brightness adjustment 230 may be performed based on remaining battery power. For instance, the brightness of the display 252 may be reduced when the remaining battery power is relatively low, and the brightness of the display 252 may be increased when the remaining battery power is relatively high. In some circumstances, the dockee 152 may be moved to an area (e.g., an office workspace) that provides wireless charging stations. Upon entering such an area, the dockee 152 may dock to the docking station 102. When docked to the docking station 102, the dockee 152 may utilize a modality that increases the brightness of the display 252, even if the remaining battery power is relatively low, because of the availability of wireless charging stations. Such a modality may allow the dockee 152 to provide the improved user experience of a brighter display 252. After the dockee 152 leaves such an area, the dockee 152 may no longer be docked to the docking station 102. When no longer docked to the docking station 102, the dockee 152 may utilize a modality different from the example described above.

In some configurations, the modality may affect the behavior of a component of the dockee 152 that pertains to privacy and/or security. A non-limiting example of a privacy and/or security setting is the locking 234 and/or unlocking 232 the display 252. When the display 252 is locked 234, the user may not be able to access certain information stored in the dockee 152. When the display 252 is unlocked 232, the user may have access to such information. A non-limiting example of a technique for unlocking 232 the display 252 is to enter a passphrase, password, or specific numeric code. In some circumstances, the dockee 152 may be moved from an unsecure area (e.g., public streets) to a secure area (e.g., inside of a restricted-access portion of a government building). Upon entering such an area, the dockee 152 may dock to the docking station 102. When docked to the docking station 102, the dockee 152 may utilize a modality that automatically unlocks 232 the otherwise locked display 252 of the dockee 152. Such a modality may allow the user to easily access the information stored in the dockee 152 without the need to manually unlock 232 the display 252 of the dockee 152, thereby improving the user experience without substantially compromising privacy and/or security. After the dockee 152 leaves such an area, the dockee 152 may no longer be docked to the docking station 102. When no longer docked to the docking station 102, the dockee 152 may utilize an alternative modality that automatically locks 234 the display 252 of the dockee 152.

In some configurations, the modality may affect the behavior of a component of the dockee 152 that pertains to location determination (e.g., geolocation). A non-limiting example of location determination is a Global Positioning System (GPS). Although the GPS may be helpful to a user, the GPS may consume substantial amounts of power. During certain circumstances, power may be conserved by turning off the GPS. In some circumstances, the dockee 152 may be moved to an area for which the location determination is not needed. For instance, the dockee 152 may be moved to an office building. While in the office building, the user of the dockee 152 will not be doing any navigation and, accordingly, may not have a need for the GPS. Upon entering such an area, the dockee 152 may dock to the docking station 102. When docked to the docking station 102, the dockee 152 may utilize a modality that automatically disables GPS 236. Such a modality may allow the dockee 152 to conserve power consumption. After the dockee 152 leaves such an area, the user of the dockee 152 may need assistance with navigation and, accordingly, may have a need for location determination. When no longer docked to the docking station 102, the dockee 152 may utilize an alternative modality that automatically enables the GPS 238.

In some configurations, the modality may affect the behavior of a component of the dockee 152 that pertains to the haptic features of the dockee 152. A non-limiting example of a haptic feature is vibration 240. Although vibration 240 may be helpful to the user of the dockee 152 during certain circumstances, the vibration 240 may also be bothersome. In some circumstances, the dockee 152 may be moved to a quiet area (e.g., a library). In such a quiet area, the vibration 240 may generate a relatively high amount of noise as compared to the other (ambient) noises, thereby potentially bothering others located nearby the dockee 152. Upon entering such an area, the dockee 152 may dock to the docking station 102. When docked to the docking station 102, the dockee 152 may utilize a modality that automatically disables vibration 240. After the dockee 152 leaves such a quiet area, the noise generated by the vibration 240 may be relatively low as compared to other (ambient) noises, thereby unlikely to bother others located nearby the dockee 152. When no longer docked to the docking station 102, the dockee 152 may utilize an alternative modality that automatically enables the vibration 240.

Although various non-limiting examples of modalities, and the respective behaviors of one or more components of the dockee 152, are illustrated in FIG. 2, one of ordinary skill will understand that various other modalities, with the respective behaviors of one or more components of the dockee 152, may be implemented without deviating from the scope of the present disclosure. Some additional examples not illustrated in FIG. 2 include: (1) muting, un-muting, and/or changing the volume of a ringer of the dockee 152; (2) turning on and/or turning off a built-in display of the dockee 152; (3) running a user-defined JavaScript; (4) displaying a special message; (5) automatically launching a particular type of application (e.g., entertainment application, productivity application) based on the location (e.g., home, work) of the dockee 152 and/or the docking station 102; (6) availability of a particular type of application (e.g., entertainment application, productivity application) for user selection based on the location (e.g., home, work) of the dockee 152 and/or the docking station 102; (7) enablement and/or disablement of voice-activated operations (e.g., voice-activated calling, voice-activated answering) of the dockee 152; (8) offloading processing operations to a processor external (e.g., not "built-in") to the dockee 152; and (9) enabling and/or disabling one or more radios of the WLAN (e.g., 60 GHz, 2.4/5 GHz, Sub 1 GHz (S1G)).

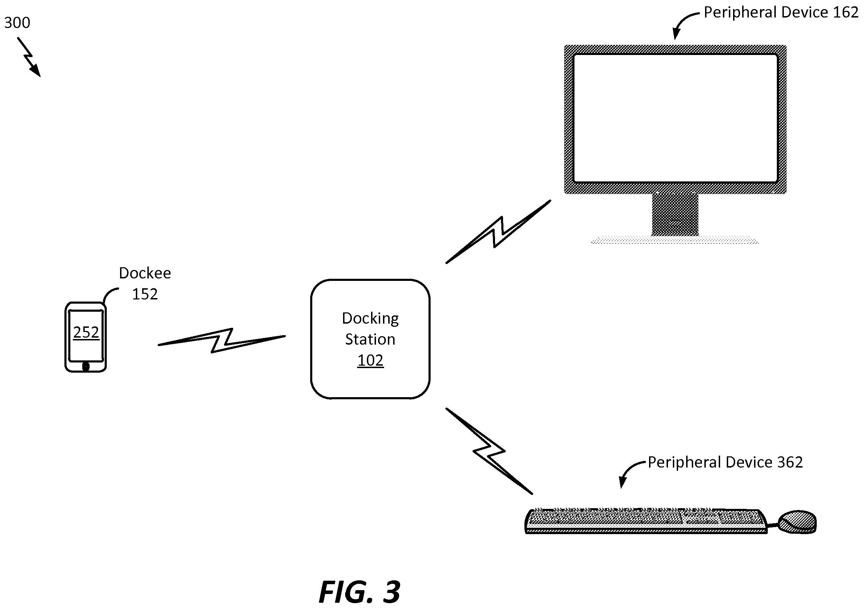

FIG. 3 is a diagram 300 illustrating an example of a dockee 152 docking to a docking station 102. In some configurations, the docking station 102 may be connected, via a wired connection and/or a wireless connection, to one or more peripheral devices 162, 362. In this example, the peripheral device 162 includes a large display, and the peripheral device 362 includes a keyboard and a mouse.

A wireless docking system may provide seamless connectivity, enabling two or more devices to connect together without needing wires, a docking connector, a personal identification number (PIN) code, elaborate pairing process per peripheral, nor other similar elements. Peripherals associated with the docking station 102 may act as a group. Many different types of peripherals may be supported, including bridging of legacy peripherals. Existing application sessions/connections may be left intact.

To establish a docking session, the docking station 102 and the dockee 152 may each receive and/or transmit various types of information. For example, the dockee 152 may transmit a probe request to the docking station 102. In response to the probe request, the docking station 102 may transmit a response message. Such exchanges of information may allow the dockee 152 to discover the docking station 102. The dockee 152 and the docking station 102 may also engage in various authentication/association exchanges. The dockee 152 and the docking station 102 may also engage in a handshake procedure as well as a channel establishment process. However, one of ordinary skill in the art will understand that every feature described in the above non-limiting example is not necessarily required and that alternative and/or additional features may be implemented without deviating from the scope of the present disclosure.

After the dockee 152 docks to the docking station 102, the docking station 102 may function as a relay station that relays information to and/or from the various apparatus docked and/or connected to the dockings station 102. For example, referring to the example illustrated in FIG. 2, the docking station 102 may relay user inputs received at the keyboard and mouse of the peripheral device 362 to the dockee 152. As another example, the docking station 102 may relay output signals from the dockee 152 to a large display of the peripheral device 162. The examples of peripheral devices 162, 362 illustrated in FIG. 3 are not intended to limit the scope of the present disclosure. Various other peripheral devices exist and may be used without deviating from the scope of the present disclosure.

In some configurations, after the dockee 152 docks to the docking station 102, the docking station 102 may determine whether one or more conditions are satisfied during the docking session. The condition may refer to a parameter, a setting, a state, and/or an indicator present with regard to the dockee 152 and/or the docking station 102. In some configurations, the condition may simply be the detection that the dockee 152 has docked with the docking station 102. In some other configurations, the condition may be more complex. Various non-limiting examples of such conditions are provided throughout the present disclosure. When the docking station 102 determines that the condition is satisfied, the docking station 102 may transmit various data to the dockee 152. The transmitted data may be configured to control a modality of the dockee 152. As discussed in greater detail above, the modality of the dockee 152 may include a behavior of one or more of the components of the dockee 152. In other words, after the docking station 102 determines that a condition has been satisfied, the docking station 102 may transmit data to the dockee 152, and that transmitted data may be configured to control the modality of the dockee 152, which may affect the behavior of one or more components of the dockee 152, as described in greater detail throughout the present disclosure.

In some configurations, the condition includes a predetermined user input to a peripheral device 162, 362 communicating with the docking station 102 during the docking session. For example, referring to FIG. 3, during the docking session, the user may utilize a keyboard of the display peripheral device 362 to input a particular sequence of letters, numbers, and/or characters. The aforementioned condition may be satisfied when the particular sequence of letters, numbers, and/or characters matches a predetermined value. In such configurations, the condition is satisfied when a particular activity is performed (e.g., a particular user input to the peripheral device 162, 362) during the docking session. One of ordinary skill in the art will understand that alternative activities may also be performed to satisfy the aforementioned condition without deviating from the scope of the present disclosure. When the docking station 102 determines that the aforementioned condition has been satisfied, the docking station 102 may transmit data to control the modality of the dockee 152 in various ways. The transmitted data may be configured to control the modality of the dockee 152, which may affect the behavior of one or more components of the dockee 152, as described in greater detail throughout the present disclosure.

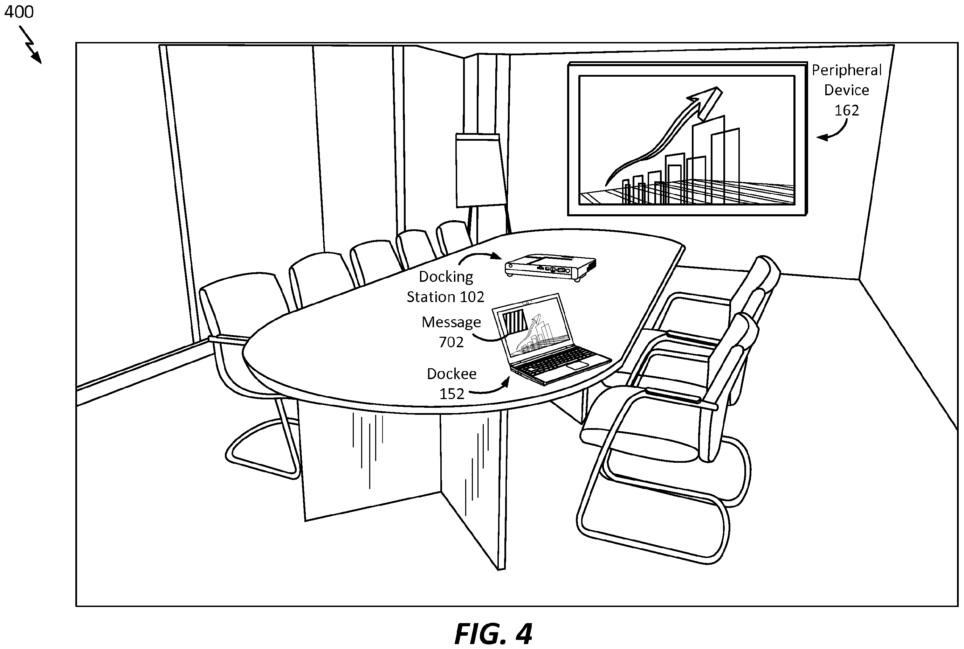

FIG. 4 is a diagram 400 illustrating an example of a dockee 152 docking to a docking station 102 in a meeting room. In the example illustrated in FIG. 4, the dockee 152 is a laptop computer. The docking station 102 is connected via a wireless connection to the peripheral device 162, which includes a large display. After the dockee 152 docks to the docking station 102, the docking station 102 may function as a relay station that relays information to and/or from the various apparatus docked and/or connected to the dockings station 102. The docking station 102 may relay output signals from the dockee 152 to the large display of the peripheral device 162. After the dockee 152 docks to the docking station 102, the docking station 102 may determine whether one or more conditions are satisfied during the docking session. As described in greater detail herein, the condition may refer to a parameter, a setting, a state, and/or an indicator present with regard to the dockee 152 and/or the docking station 102. The condition may simply be the detection that the dockee 152 has docked with the docking station 102 or the condition may be more complex, such as any one or more of the various non-limiting examples of conditions that are provided throughout the present disclosure.

When the docking station 102 determines that the condition is satisfied, the docking station 102 may transmit data to the dockee 152. The transmitted data may be configured to control a modality of the dockee 152. As discussed in greater detail above, the modality of the dockee 152 may include a behavior of one or more of the components of the dockee 152. In the particular example illustrated in FIG. 4, the transmitted data is configured to control the modality of the dockee 152 such that the information displayed on the dockee 152 is mirrored on the large device of the peripheral device 162. Accordingly, at least a portion of the information displayed on the dockee 152 is also exported from the dockee 152 for display on the large display of the peripheral device 162, as illustrated in FIG. 4.

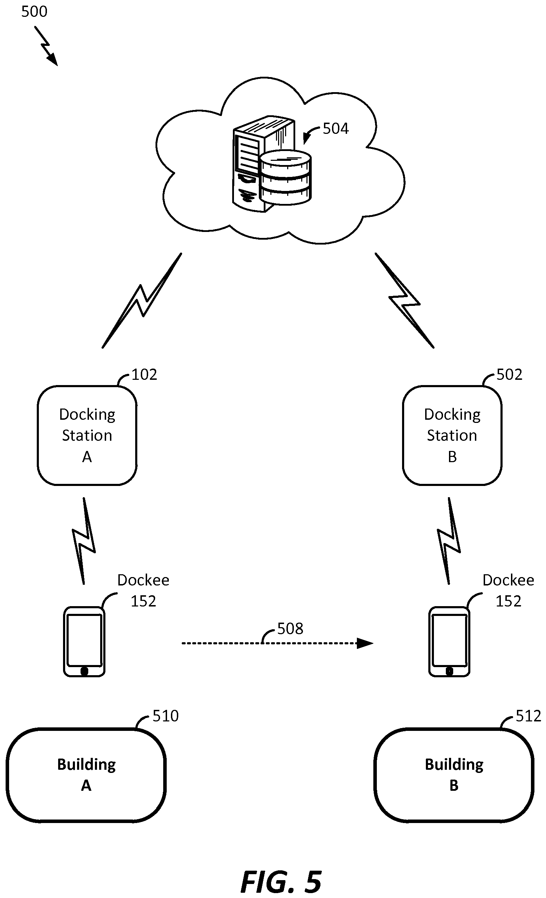

FIG. 5 is a diagram 500 illustrating an example of a dockee 152 in communication with various docking stations, such as Docking Station A 102 and Docking Station B 502. Although two docking stations are illustrated in FIG. 5, one of ordinary skill in the art will understand that more than two docking stations may be included without deviating from the scope of the present disclosure. The docking stations 102, 502 may be located in separate areas of a particular enterprise. For example, the enterprise may be an engineering facility that has many buildings. Docking Station A 102 be located in Building A 510 of the engineering facility, and Docking Station B 502 may be located in Building B 512 of the engineering facility.

While the dockee 152 is located in Building A, the dockee 152 may be docked to Docking Station A 102. In some configurations, the dockee 152 may be associated with a unique identifier. A non-limiting example of such a unique identifier may be a Media Access Control (MAC) address. The server 504 may store a modality profile for each unique identifier. When the dockee 152 docks to Docking Station A, Docking Station A 102 may determine whether the server 502 has a modality profile for the unique identifier of the dockee 152. If the server 502 has a modality profile for the unique identifier of the dockee 152, Docking Station A 102 may transmit data to the dockee 152, and such transmitted data may be configured to control the modality of the dockee 152 according to that modality profile. For example, the modality profile for the unique identifier of the dockee 152 may include turning off the camera component of the dockee 152. Such a modality may be provided for various security reasons. Accordingly, while the dockee 152 is docked to Docking Station A 102, the camera component of the dockee 152 is turned off.

Over time, the dockee 152 may be moved 508 (e.g., by its user) from Building A 510 to Building B 512. While located in Building B 512, the dockee 152 may outside of the communication range of Docking Station A 102 and, therefore, unable to dock to Docking Station A 102. However, while located in Building B 512, the dockee 152 may be able to dock to Docking Station B 502. When the dockee 152 docks to Docking Station B 502, Docking Station B 502 may determine whether the server 502 has a modality profile for the unique identifier of the dockee 152. The unique identifier of the dockee 152 does not change as a result of moving from Building A 510 to Building B 512. Because the server 502 has a modality profile for the unique identifier of the dockee 152, Docking Station B 502 may transmit data to the dockee 152, and such transmitted data may be configured to control the modality of the dockee 152 according to that modality profile. Even though the dockee 152 has changed locations from Building A 510 to Building B 512, the modality profile is unchanged. Accordingly, the modality of the dockee 152 can remain the same as the dockee 152 moves from one location to another location. As such, while the dockee 152 is docked to Docking Station B 502, the camera component of the dockee 152 remains turned off, even though the dockee 152 has docked from one docking station (e.g., Docking Station A 102) to another docking station (e.g., Docking Station B).

As described above, the docking station may determine whether a condition is satisfied by determining whether a unique identifier of the dockee 152 matches a modality profile accessible to the docking station. The modality profile may be accessible to the docking station in various ways. For example, the modality profile may be stored on the server 504, as described above. As another example, the modality profile may be stored in a memory of the docking station. One of ordinary skill in the art will understand that the modality profile may be made accessible to the docking station using various other ways without deviating from the scope of the present disclosure.

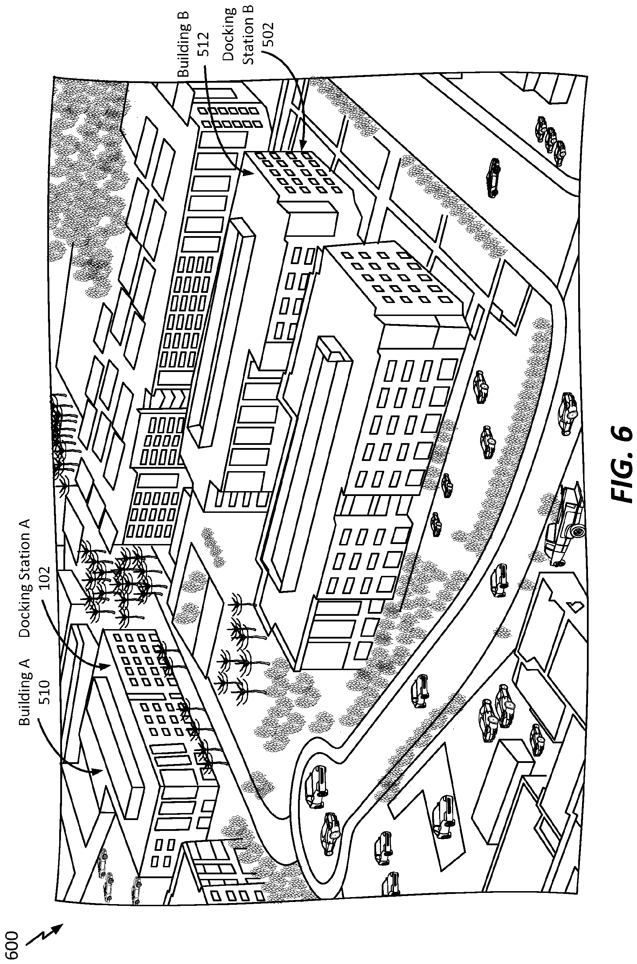

FIG. 6 is a diagram 600 illustrating an example of a dockee 152 in communication with various docking stations 102, 502 in an enterprise environment. A non-limiting example of the enterprise environment is the engineering facility, as described in greater detail above. Docking Station A 102 be located in Building A 510 of the engineering facility, and Docking Station B 502 may be located in Building B 512 of the engineering facility. While the dockee 152 is located in Building A, the dockee 152 may be docked to Docking Station A 102. The server 504 (see FIG. 5) may be located locally (e.g., somewhere in the engineering facility) or remotely (e.g., somewhere outside of the engineering facility). If the server 502 has a modality profile for the unique identifier of the dockee 152, Docking Station A 102 may transmit data to the dockee 152, and such transmitted data may be configured to control the modality of the dockee 152 according to that modality profile. As discussed above, the modality profile for the unique identifier of the dockee 152 may include turning off the camera component of the dockee 152.

The user of the dockee 152 may move the dockee 152 from Building A 510 to Building B 512. When the dockee 152 docks to Docking Station B 502, Docking Station B 502 may determine whether the server 502 has a modality profile for the unique identifier of the dockee 152. The unique identifier of the dockee 152 does not change as a result of moving from Building A 510 to Building B 512. Because the server 502 has a modality profile for the unique identifier of the dockee 152, Docking Station B 502 may transmit data to the dockee 152, and such transmitted data may be configured to control the modality of the dockee 152 according to that modality profile. Even though the dockee 152 has changed locations from Building A 510 to Building B 512, the modality profile is unchanged. Accordingly, the modality of the dockee 152 may remain the same as the dockee 152 moves from one location (e.g., Building A 510) to another location (e.g., Building B 512).

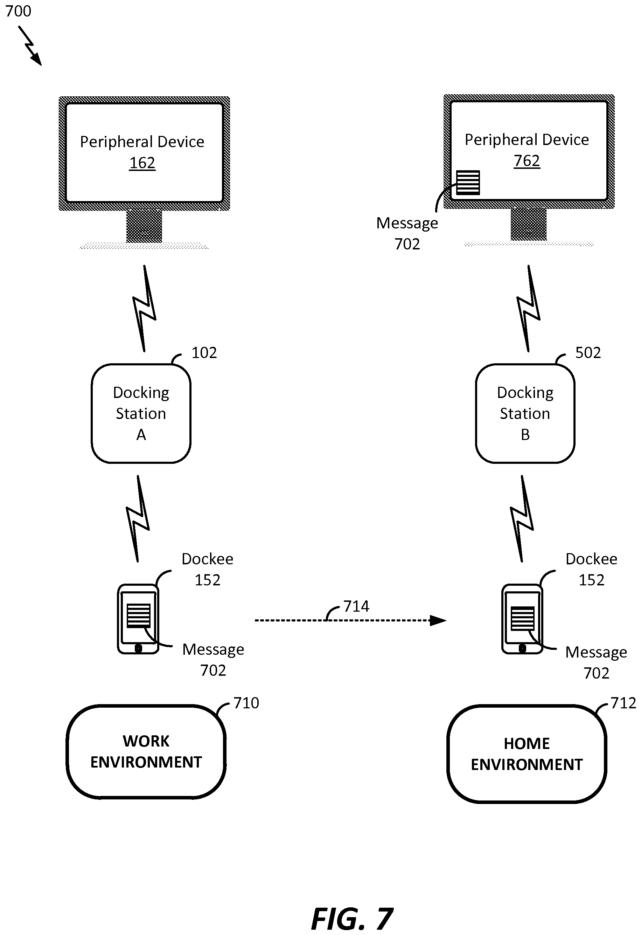

FIG. 7 is a diagram 700 illustrating an example of a dockee 152 docking to docking stations associated with various environments. In some configurations, two or more docking stations may be associated with different environments relative to each other. An environment may be a geolocation, an address, or a setting. In the non-limiting example illustrated in FIG. 7, Docking Station A 102 is associated with a work environment 710, and Docking Station B 502 is associated with a home environment 712. Each docking station 102, 502 may determine its association with an environment based on various factors. For example, Docking Station A 102 may determine that it is associated with a work environment 710 based on the MAC address, the Internet protocol (IP) address, or any other suitable identifier accessible to Docking Station A 102. Similarly, Docking Station B 502 may determine that it is associated with a work environment 712 based on the MAC address, the IP address, or any other suitable identifier accessible to Docking Station B 502.

In some configurations, the docking station 102, 502 may transmit data configured to control the modality of the dockee 152 according to settings corresponding to the environment with which the docking station 102, 502 is associated. When the dockee 152 is docked to Docking Station A 102, Docking Station A 102 may transmit data to the dockee 152 to control the modality of the dockee 152 according to settings corresponding to the work environment 710. For example, the settings corresponding to the work environment 710 may specify that a particular type of message 702 (e.g., a personal text message) received by the dockee 152 cannot be mirrored onto the peripheral device 162. In other words, Docking Station A 102 can refrain from routing such data from the dockee 152 to the peripheral device 162 based on settings associated with the location (e.g., work environment 710) of Docking Station A 102. Such a modality may provide privacy to the user of the dockee 152. Accordingly, that particular type of message 702 (e.g., a personal text message) will not be displayed on the peripheral device 162 when the dockee 152 is docked to a docking station (e.g., Docking Station A 102) associated with a work environment 710.

FIG. 4 illustrates a non-limiting example of such a concept. As illustrated in FIG. 4, the message 702 (e.g., a personal text message) is received by the dockee 152. The dockee 152 is docked to the docking station 102. The docking station 102 is in a meeting room, which is a type of work environment 710. Accordingly, the message 702 (e.g., a personal text message) is not displayed on the peripheral device 162 during the meeting because the docking station 102 is associated with a work environment 710.

Referring to FIG. 7, the user of the dockee 152 may move 714 the dockee 152 from the work environment 710 to the home environment 712. When the dockee 152 is docked to Docking Station B 502, Docking Station B 502 may transmit data to the dockee 152 to control the modality of the dockee 152 according to settings corresponding to the home environment 712. For example, the settings corresponding to the home environment 712 may specify that a particular type of message 702 (e.g., a personal text message) received by the dockee 152 can be mirrored on the peripheral device 762. Because the user of the dockee 152 is located in their home environment 712, the user of the dockee 152 may enjoy viewing that particular type of message 702 (e.g., a personal text message) on the peripheral device 762. Accordingly, that particular type of message 702 (e.g., a personal text message) can be displayed on the peripheral device 762 when the dockee 152 is docked to a docking station (e.g., Docking Station B 502) associated with a home environment 712. In other words, Docking Station B 502 routes such data from the dockee 152 to the peripheral device 762 based on settings associated with the location (e.g., home environment 712) of Docking Station B 502.

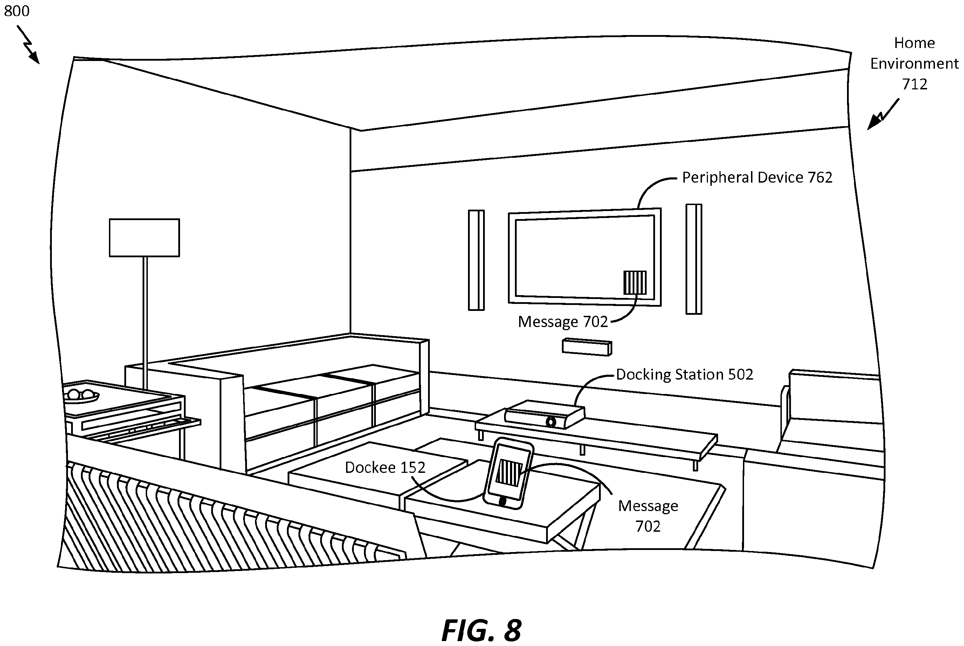

FIG. 8 is a diagram 800 illustrating an example of the dockee 152 docking to a docking station 502 associated with a home environment 712. As illustrated in FIG. 8, the message 702 (e.g., a personal text message) is received by the dockee 152. The dockee 152 is docked to the docking station 502. The docking station 502 is in a family/living room, which is a type of home environment 712. Accordingly, the message 702 (e.g., a personal text message) is displayed on the peripheral device 762 of the family/living room because the docking station 502 is associated with a home environment 712.

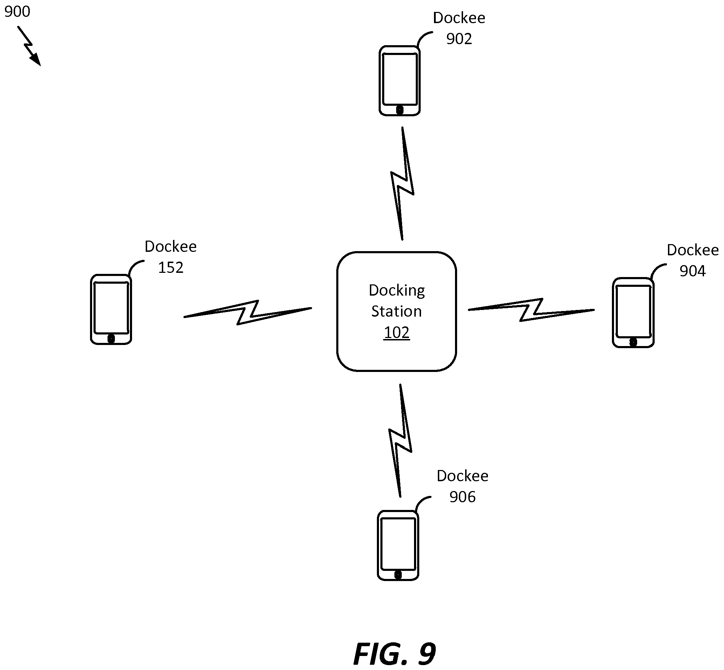

FIG. 9 is a diagram illustrating an example of various dockees 152, 902, 904, 906 docking to a docking station 102. In some circumstances, the dockees 152, 902, 904, 906 may need to communicate with each other. In existing systems, the dockees 152, 902, 904, 906 may communicate with each other via a direct connection (wired or wireless) between each other. For example, dockee 152 may establish a channel for wireless communication with dockee 902. Such a connection may be referred to as a 'one-hop' communication. However, communications directly between the dockees 152, 902, 904, 906 may have various limitations.

Such limitations may be overcome if the dockees 152, 902, 904, 906 communicate to each other using a connection via the docking station 102. For example, dockee 152 may communicate with dockee 902 via the docking station 102. Such a connection may be referred to as a 'two-hop' communication. A 'one-hop' communication is not always necessarily faster than a 'two-hop' communication. As such, there exist circumstances wherein the docking station 102 may be used to facilitate a communication between the dockees 152, 902, 904, 906 that is faster than a direct communication between the individual dockees 152, 902, 904, 906 (without using the docking station 102). Accordingly, in some configurations, the docking station 102 may determine whether a condition exists, and such a condition may be whether two or more dockees 152, 902, 904, 906 are docked to the docking station 102. When two or more dockees 152, 902, 904, 906 are docked to the docking station 102, the docking station 102 may transmit data configured to control the modality of the dockee(s) 152, 902, 904, 906 such that the dockee(s) 152, 902, 904, 906 communicate with each other exclusively via the docking station 102.

In some configurations, the docking station 102 may determine whether various other conditions exist. For instance, the docking station 102 may determine whether a number of dockees 152, 902, 904, 906 docked to the docking station 102 is equal to or greater than a threshold number of dockees 152, 902, 904, 906. The number of dockees 152, 902, 904, 906 being docked to the docking station 102 provides valuable information to the docking station 102. By knowing the number of dockees 152, 902, 904, 906 docked to the docking station 102, the docking station 102 may be better able to control the dockees 152, 902, 904, 906 and/or the peripheral devices 162, 762 associated with the docking station 102. As a non-limiting example, the docking station 102 may be located in an enclosed theater that uses a heating, ventilation and air-conditioning (HVAC) system to regulate the temperature, humidity, quality and/or various other parameters of the air. The docking station 102 may be capable of communicating with the HVAC system. (In some configurations, the HVAC system may even be considered a peripheral 162 and/or a dockee.) Each person entering the theater may have a dockee 152, 902, 904, 906 that docks to the docking station 102 upon entering the theater. By knowing the number of dockees 152, 902, 904, 906 docked to the docking station 102, the docking station 102 may be able to communicate valuable information to the HVAC system about the number of people in the theater and, accordingly, the corresponding need for increased/decreased heating/cooling by the HVAC system.

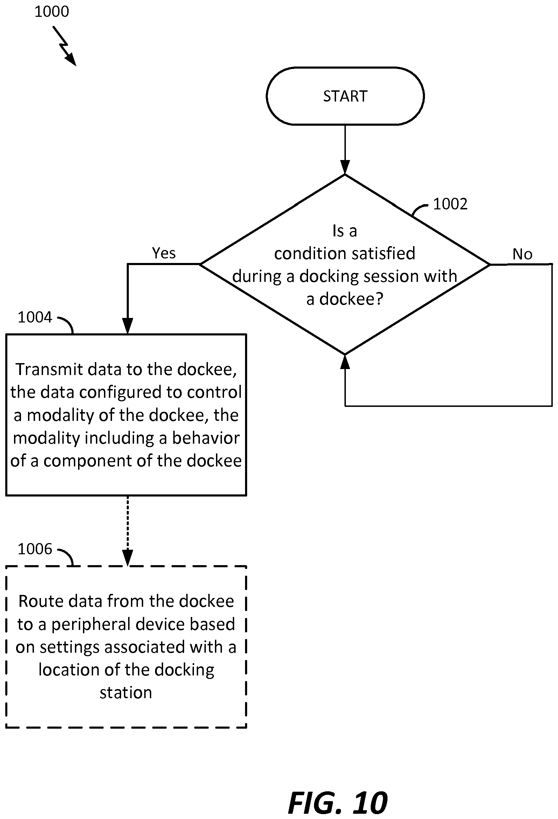

FIG. 10 is a diagram 1000 illustrating an example of a various methods and/or processes. Such methods and/or processes may be performed by a docking station 102, 502, or by any other suitable apparatus or means for carrying out the described functions. At block 1002, the docking station 102, 502 may determine whether a condition is satisfied during a docking session with a dockee 152, 902, 904, 906. Various non-limiting examples of various conditions are described in detail above and therefore will not be repeated. If the docking station 102, 502 determines that the condition is not satisfied, the docking station 102, 502 may continue to perform the aforementioned determination at block 1002. However, if the docking station 102, 502 determines that the condition is satisfied, at block 1004, the docking station 102, 502 may transmit data to the dockee 152, 902, 904, 906. The data may be configured to control a modality of the dockee 152, 902, 904, 906. The modality of the dockee 152, 902, 904, 906 may include a behavior of a component of the dockee 152, 902, 904, 906. Various non-limiting examples of modalities and behaviors of such components of the dockee 152, 902, 904, 906 are described in detail above and therefore will not be repeated.

In some configurations, at block 1006, the docking station 102, 502 may route data from the dockee to a peripheral device 162, 762 based on settings associated with a location of the docking station 102, 502. For example, referring to FIG. 7, Docking Station B 502 may route data from the dockee 152 to a peripheral device 762 based on settings associated with the location (e.g., home environment 712) of Docking Station B 502.

The methods and/or processes described with reference to FIG. 10 are provided for illustrative purposes and are not intended to limit the scope of the present disclosure. The methods and/or processes described with reference to FIG. 10 may be performed in sequences different from those illustrated therein without deviating from the scope of the present disclosure. Additionally, some or all of the methods and/or processes described with reference to FIG. 10 may be performed individually and/or together without deviating from the scope of the present disclosure. It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of' a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f), unless the element is expressly recited using the phrase "means for" or, in the case of a method claim, the element is recited using the phrase "step for."

## Claims

1. A method operable at a docking station (102) for wireless communication with a dockee (152), the method comprising:
determining an association with an environment (710,712), wherein the determination of the association with the environment is based on an address or an identifier accessible to the docking station (102);
storing data that is configured to control a modality of the dockee according to settings corresponding to the environment, the data pertaining to at least one parameter, at least one function, or a combination thereof that characterizes a behavior of one or more components of the dockee (152);
determining (1002) whether a condition is satisfied during a docking session with the dockee; and
transmitting (1004) the data to the dockee if the condition is satisfied.

2. The method of claim 1, wherein the determination of whether the condition is satisfied comprises determining whether a peripheral device communicating with the docking station during the docking session received a user input.

3. The method of claim 1, wherein the determination of whether the condition is satisfied comprises determining whether a number of dockees docked to the docking station is equal to or greater than a threshold number of dockees.

4. The method of claim 1, wherein:
the determination of whether the condition is satisfied comprises determining whether another dockee is docked to the docking station; and
the data is further configured to control the modality of the dockee such that the dockee communicates with the another dockee exclusively via the docking station.

5. The method of claim 1, wherein:
the determination of whether the condition is satisfied comprises determining whether a unique identifier of the dockee is associated with a modality profile accessible to the docking station; and
the data is further configured to control the modality of the dockee according to the modality profile.

6. The method of claim 1, further comprising:
routing data from the dockee to a peripheral device based on the settings corresponding to the location of the docking station.

7. The method of claim 1, wherein the data is further configured to control the modality of the dockee such that the one or more components of the dockee conserve power consumption.

8. An apparatus (102) for communication with a dockee (152), the apparatus comprising:
a memory (114) configured to store data that is configured to control a modality of the dockee (152) according to settings corresponding to an environment (710, 712) that the apparatus is associated with, the data pertaining to at least one parameter, at least one function, or a combination thereof that characterizes a behavior of one or more components of the dockee; and
a processing system (104) communicatively coupled to the memory and configured to:
determine an association with the environment, wherein the determination of the association with the environment is based on an address or an identifier accessible to the apparatus;
store the data corresponding to the environment;
determine whether a condition is satisfied (1002) during a docking session with the dockee; and
provide the data to the dockee if the condition is satisfied (1004).

9. The apparatus of claim 8, wherein the determination of whether the condition is satisfied comprises determining whether a peripheral device communicating with the apparatus during the docking session received a user input; or
wherein the determination of whether the condition is satisfied comprises determining whether a number of dockees docked to the apparatus is equal to or greater than a threshold number of dockees.

10. The apparatus of claim 8, wherein:
the determination of whether the condition is satisfied comprises determining whether another dockee is docked to the apparatus; and
the data is further configured to control the modality of the dockee such that the dockee communicates with the another dockee exclusively via the apparatus.

11. The apparatus of claim 8, wherein:
the determination of whether the condition is satisfied comprises determining whether a unique identifier of the dockee is associated with a modality profile accessible to the apparatus; and
the data is further configured to control the modality of the dockee according to the modality profile.

12. The apparatus of claim 8, wherein the processing system is further configured to:
route data from the dockee to a peripheral device based on the settings corresponding to the location of the apparatus.

13. The apparatus of claim 8, wherein the data is further configured to control the modality of the dockee such that the one or more components of the dockee conserve power consumption.

14. The apparatus of claim 8, further comprising a transmitter configured to transmit the data to the dockee, wherein the apparatus is configured as a docking station.

15. A computer-readable medium of an apparatus, the computer-readable medium comprising computer-executable code configured for carrying out the method of any of claims 1-7.

## Patentansprüche

1. Ein Verfahren, das an einer Andock- bzw. Dockingstation (102) zur Drahtloskommunikation mit einer andockenden Einheit bzw. einem Dockee (152) betreibbar ist, wobei das Verfahren Folgendes aufweist:
Bestimmen einer Assoziation mit einer Umgebung (710, 712), wobei die Bestimmung der Assoziation mit der Umgebung auf einer Adresse oder einem Identifikator basiert, auf die bzw. den durch die Dockingstation (102) zugegriffen werden kann;
Speichern von Daten, die konfiguriert sind zum Steuern einer Modalität des Dockees gemäß Einstellungen entsprechend der Umgebung, wobei sich die Daten auf wenigstens einen Parameter, eine Funktion oder eine Kombination davon beziehen, der bzw. die ein Verhalten eines oder mehrerer Komponenten des Dockees (152) charakterisiert;
Bestimmen (1002), ob eine Bedingung während einer Docking-Sitzung mit dem Dockee erfüllt ist; und
Senden (1004) der Daten an den Dockee, wenn die Bedingung erfüllt ist.

2. Verfahren nach Anspruch 1, wobei die Bestimmung, ob die Bedingung erfüllt ist, Bestimmen aufweist, ob eine Peripherieeinrichtung, die mit der Docking-station kommuniziert, während der Dockingsitzung eine Nutzereingabe empfangen hat.

3. Verfahren nach Anspruch 1, wobei die Bestimmung, ob die Bedingung erfüllt ist, weiter Bestimmen aufweist, ob eine Anzahl von Dockees, die an die Dockingstation angedockt sind, gleich oder größer als eine Schwellenwertanzahl von Dockees ist.

4. Verfahren nach Anspruch 1, wobei:
die Bestimmung, ob die Bedingung erfüllt ist, Bestimmen aufweist, ob ein weiterer Docke an die Docking-Station angedockt ist; und
die Daten weiter konfiguriert sind zum Steuern der Modalität des Dockees, so dass der Dockee mit dem weiteren Dockee exklusiv über die Dockingstation kommuniziert.

5. Verfahren nach Anspruch 1, wobei:
die Bestimmung, ob die Bedingung erfüllt ist, Bestimmen aufweist, ob ein eindeutiger Identifikator des Dockees mit einem Modalitätsprofil assoziiert ist, auf das durch die Dockingstation zugegriffen werden kann; und
die Daten weiter konfiguriert sind zum Steuern der Modalität des Dockees gemäß dem Modalitätsprofil.

6. Verfahren nach Anspruch 1, das weiter Folgendes aufweist:
Routen bzw. Weiterleiten von Daten von dem Dockee an eine Peripherieeinrichtung basierend auf den Einstellungen entsprechend dem Standort der Dockingstation.

7. Verfahren nach Anspruch 1, wobei die Daten weiter konfiguriert sind zum Steuern der Modalität des Dockees, so dass die eine oder die mehreren Komponenten des Dockees einen Leistungsverbrauch einsparen.

8. Eine Vorrichtung (102) zur Kommunikation mit einer andockenden Einheit bzw. einem Dockee (152), wobei die Vorrichtung Folgendes aufweist:
einen Speicher (114), der konfiguriert ist zum Speichern von Daten, die konfiguriert sind zum Steuern einer Modalität des Dockees (152) gemäß Einstellungen entsprechend einer Umgebung (710, 712), mit der die Vorrichtung assoziiert ist, wobei sich die Daten auf wenigstens einen Parameter, wenigstens eine Funktion oder eine Kombination davon beziehen, der bzw. die ein Verhalten eines oder mehrerer Komponenten des Dockees charakterisiert; und
ein Verarbeitungssystem (104), das kommunikativ an den Speicher gekoppelt ist und konfiguriert ist zum:
Bestimmen einer Assoziation mit der Umgebung, wobei die Bestimmung der Assoziation mit der Umgebung auf einer Adresse oder einem Identifikator basiert, auf die bzw. den durch die Vorrichtung zugegriffen werden kann;
Speichern der Daten entsprechend der Umgebung;
Bestimmen, ob eine Bedingung während einer Dockingsitzung mit dem Dockee erfüllt ist (1002); und
Vorsehen der Daten an den Dockee, wenn die Bedingung erfüllt ist (1004).

9. Vorrichtung nach Anspruch 8, wobei das Bestimmen, ob die Bedingung erfüllt ist, Bestimmen aufweist, ob eine Peripherieeinrichtung, die mit der Vorrichtung während der Dockingsitzung kommuniziert, eine Nutzereingabe empfangen hat; oder
wobei die Bestimmung, ob die Bedingung erfüllt ist, Bestimmen aufweist, ob eine Anzahl von Dockees, die an die Vorrichtung angedockt sind, gleich oder größer als eine Schwellenwertanzahl von Dockees ist.

10. Vorrichtung nach Anspruch 8, wobei:
die Bestimmung, ob die Bedingung erfüllt ist, Bestimmen aufweist, ob ein anderer Dockee an die Vorrichtung angedockt ist; und
die Daten weiter konfiguriert sind zum Steuern der Modalität des Dockees, so dass der Dockee mit dem anderen Dockee exklusiv über die Vorrichtung kommuniziert.

11. Vorrichtung nach Anspruch 8, wobei:
die Bestimmung, ob die Bedingung erfüllt ist, Bestimmen aufweist, ob ein eindeutiger Identifikator des Dockee mit einem Modalitätsprofil assoziiert ist, auf das durch die Vorrichtung zugegriffen werden kann; und
die Daten weiter konfiguriert sind zum Steuern der Modalität des Dockee gemäß dem Modalitätsprofil.

12. Vorrichtung nach Anspruch 8, wobei das Verarbeitungssystem weiter konfiguriert ist zum:
Weiterleiten von Daten von dem Dockee an eine Peripherieeinrichtung basierend auf den Einstellungen entsprechend dem Standort der Vorrichtung.

13. Vorrichtung nach Anspruch 8, wobei die Daten weiter konfiguriert sind zum Steuern der Modalität des Dockee, so dass die eine oder die mehreren Komponenten des Dockee Leistungsverbrauch einsparen.

14. Vorrichtung nach Anspruch 8, die weiter einen Sender aufweist, der konfiguriert ist zum Senden der Daten an den Dockee, wobei die Vorrichtung als eine Dockingstation konfiguriert ist.

15. Ein computerlesbares Medium einer Vorrichtung, wobei das computerlesbares Medium von einem Computer ausführbaren Code aufweist, der konfiguriert ist zum Durchführen des Verfahrens nach einem der Ansprüche 1-7.

## Revendications

1. Procédé pouvant être mis en oeuvre au niveau d'une station d'accueil (102) pour une communication sans fil avec un dispositif accueilli (152), le procédé comprenant les étapes consistant à :
déterminer une association avec un environnement (710, 712), dans lequel la détermination de l'association avec l'environnement est basée sur une adresse ou un identifiant accessible à la station d'accueil (102) ;
stocker des données qui sont configurées pour contrôler une modalité du dispositif accueilli en fonction de réglages correspondant à l'environnement, les données étant relatives à au moins un paramètre, au moins une fonction ou une combinaison des deux qui caractérise un comportement d'un ou plusieurs composants du dispositif accueilli (152) ;
déterminer (1002) si une condition est satisfaite pendant une session de connexion avec le dispositif accueilli ; et
transmettre (1004) les données au dispositif accueilli lorsque la condition est satisfaite.

2. Procédé selon la revendication 1, dans lequel la détermination de si la condition est satisfaite comprend l'étape de déterminer si un dispositif périphérique, communicant avec la station d'accueil pendant la session de connexion, a reçu une entrée utilisateur.

3. Procédé selon la revendication 1, dans lequel la détermination de si la condition est satisfaite comprend l'étape de déterminer si un nombre de dispositifs accueillis connectés à la station s'accueil est supérieur ou égal à un nombre seuil de dispositifs accueillis.

4. Procédé selon la revendication 1, dans lequel :
la détermination de si la condition est satisfaite comprend l'étape de déterminer si un autre dispositif accueilli est connecté à la station d'accueil ; et
les données transmises sont en outre configurées pour contrôler la modalité du dispositif accueilli de sorte que le dispositif accueilli communique avec l'autre dispositif accueilli exclusivement via la station d'accueil.

5. Procédé selon la revendication 1, dans lequel :
la détermination de si la condition est satisfaite comprend l'étape de déterminer si un identifiant unique du dispositif accueilli est associé à un profil de modalité accessible à la station d'accueil ; et
les données sont en outre configurées pour contrôler la modalité du dispositif accueilli en fonction du profil de modalité.

6. Procédé selon la revendication 1, comprenant en outre :
l'acheminement de données depuis le dispositif accueilli vers un dispositif périphérique sur la base des réglages correspondant à l'emplacement de la station d'accueil.

7. Procédé selon la revendication 1, dans lequel les données sont en outre configurées pour contrôler la modalité du dispositif accueilli de sorte que ledit un ou plusieurs composants du dispositif accueilli conservent une consommation d'énergie.

8. Appareil (102) de communication sans fil avec un dispositif accueilli (152), l'appareil comprenant :
une mémoire (114) configurée pour stocker des données qui sont configurées pour contrôler une modalité du dispositif accueilli (152) en fonction de réglages correspondant à un environnement (710, 712) auquel est associé l'appareil, les données étant relatives à une moins un paramètre, au moins une fonction ou une combinaison des deux qui caractérise un comportement d'un ou plusieurs composants du dispositif accueilli ; et
un système de traitement (104) couplée de façon à communiquer avec la mémoire et configuré pour :
déterminer une association avec l'environnement, dans lequel la détermination de l'association avec l'environnement est basée sur une adresse ou un identifiant accessible à l'appareil ;
stocker les données correspondant à l'environnement ;
déterminer si une condition est satisfaite (1002) pendant une session de connexion avec le dispositif accueilli ; et
fournir les données au dispositif accueilli lorsque la condition est satisfaite (1004).

9. Appareil selon la revendication 8, dans lequel la détermination de si la condition est satisfaite comprend l'étape de déterminer si un dispositif périphérique, communicant avec l'appareil pendant la session de connexion, a reçu une entrée utilisateur ; ou dans lequel la détermination de si la condition est satisfaite comprend l'étape de déterminer si un nombre de dispositifs accueillis connectés à l'appareil est supérieur ou égal à un nombre seuil de dispositifs accueillis.

10. Appareil selon la revendication 8, dans lequel :
la détermination de si la condition est satisfaite comprend l'étape de déterminer si un autre dispositif accueilli est connecté à l'appareil ; et
les données sont en outre configurées pour contrôler la modalité du dispositif accueilli de sorte que le dispositif accueilli communique avec ledit autre dispositif accueilli exclusivement via la station d'accueil.

11. Appareil selon la revendication 8, dans lequel :
la détermination de si la condition est satisfaite comprend l'étape de déterminer si un identifiant unique du dispositif accueilli est associé à un profil de modalité accessible à l'appareil ; et
les données sont en outre configurées pour contrôler la modalité du dispositif accueilli en fonction du profil de modalité.

12. Appareil selon la revendication 8, comprenant en outre :
l'acheminement de données depuis le dispositif accueilli vers un dispositif périphérique sur la base des réglages correspondant à l'emplacement de l'appareil.

13. Appareil selon la revendication 8, dans lequel les données sont en outre configurées pour contrôler la modalité du dispositif accueilli de sorte que ledit un ou plusieurs composants du dispositif accueilli conservent une consommation d'énergie.

14. Appareil selon la revendication 8, comprenant en outre un émetteur-récepteur configuré pour transmettre les données au dispositif accueilli, dans lequel l'appareil est configuré comme station d'accueil.

15. Support lisible par ordinateur d'un appareil, le support lisible par ordinateur comprenant un code exécutable par ordinateur configuré pour mettre en oeuvre le procédé selon l'une quelconque des revendications 1 à 7.
